# EUROPÄISCHE PATENTSCHRIFT

(11) **EP 2 657 111 B1**
(45) Veröffentlichungstag und Bekanntmachung des Hinweises auf die Patenterteilung: **15.03.2017**
(21) Anmeldenummer: 12007928.0
(22) Anmeldetag: 24.11.2012
(51) Int. Cl.: B62D 33/06, B62D 33/067

(54) **Fahrerhauslagerung**
Cab suspension
Suspension de cabine

(30) Priorität: 24.04.2012 DE 102012008150
(43) Veröffentlichungstag der Anmeldung: 30.10.2013
(73) Patentinhaber: MAN Truck & Bus AG, 80995 München (DE)
(72) Erfinder: Beck, Klaus, 82278 Althegnenberg (DE); Rausch, Ludwig, 80798 München (DE)
(74) Vertreter: v. Bezold & Partner Patentanwälte - PartG mbB

(56) Entgegenhaltungen:
- EP-A1- 1 724 186
- DE-A1- 1 430 735
- DE-A1- 10 133 969
- DE-A1-102005 004 449
- DE-A1-102007 008 325
- DE-A1-102007 050 170
- US-A- 3 606 437

## Beschreibung

Die Erfindung betrifft die Lagerung eines Fahrerhauses einer Sattelzugmaschine, das eine Tragstruktur und eine mit dieser verbundene Kabine aufweist, mit wenigstens zwei in einem vorderen Bereich und zwei in einem hinteren Bereich des Nutzfahrzeugfahrerhauses angeordneten Lagerelementen, über die das Fahrerhaus mit seiner Tragstruktur mittelbar oder unmittelbar mit einem Fahrgestellrahmen verbunden ist.

Die übliche Gestaltung eines Lastkraftwagens sieht Rahmenlängsträger zur Befestigung des Fahrgestells, der jeweiligen Aufbauten sowie des Fahrerhauses vor. Das Fahrerhaus stellt hierbei regelmäßig ein separat vorgruppiertes Modul dar, das über geeignete Anlenkungs- bzw. Lagerelemente mit dem Fahrgestellrahmen verbunden ist. Überwiegend kommen heute, insbesondere in Europa, Lastkraftwagen in Frontlenkerbauweise mit Mittelmotor zum Einsatz. Bei derartigen Lastkraftwagen befindet sich der Verbrennungsmotor unterhalb des Fahrerhauses und die Fahrerhausfront mit Windschutzscheibe stellt, im Gegensatz zu Lastkraftwagen mit einem Frontmotor, der sich unter einer vor dem Fahrerhaus angeordneten Haube befindet, gleichzeitig die vordere Begrenzung des Fahrzeugs dar. Um im Bereich des Verbrennungsmotors liegende Wartungs- und Reparaturpunkte im Bedarfsfall erreichen zu können, sind die Fahrerhäuser der Lastkraftwagen in Frontlenkerbauweise mit Mittelmotor nach vorne kippbar mit dem Fahrgestellrahmen verbunden.

Üblicherweise erfolgt die Lagerung eines Nutzfahrzeugfahrerhauses über vier Lagerelemente, von denen sich zwei im vorderen und zwei im hinteren Bereich des Fahrerhausbodens befinden. Eine derartige Lagerung ist beispielsweise aus der DE 10 2006 044 150 A1 bekannt. Die Lagerelemente verfügen hierbei jeweils über Feder-Dämpferelemente, die eine hohe Fahrsicherheit und Fahrkomfort gewährleisten sollen. Die vier Feder-Dämpfereinheiten sind einerseits mit den Rahmenlängsträgern und andererseits mit dem Nutzfahrzeugfahrerhaus verbunden. Zu Wartungs- und Reparaturzwecken ist das Fahrerhaus um eine Kippachse nach vorne kippbar, wobei vor dem Kippvorgang die Verbindung zwischen Fahrerhaus und den im hinteren Bereich angeordneten Lagerelementen durch Entriegeln eines Schlosses gelöst wird.

Aus der DE 14 30 735 A1 ist eine Sattelzugmaschine bekannt, mit einem im Wesentlichen über der Vorderachse am Fahrgestellrahmen angeordneten Fahrerhaus und mit einer hinter dem Fahrerhaus etwa vor der Hinterachse liegenden Aufsattelkupplung, wobei das Fahrerhaus um ein Fahrzeugquerachse schwenkbar am Fahrgestellrahmen angeordnet ist, die im Bereich von Dreivierteln des Abstands zwischen der Sattelkupplungsdrehachse und der Fahrerhausrückwand, vorzugsweise in der Vertikalebene durch die Sattelkupplungsdrehachse liegt.

Des Weiteren ist aus der DE 10 2009 004 154 A1 der Vorderwagen eines Lastkraftwagens mit Fahrerhaus bekannt, der über zwei Karosserie-Seitenmodule verfügt. Die Karosserie-Seitenmodule sind als Tragstruktur mit einem Gitterrahmen ausgeführt und können während der Montage des Fahrerhauses als komplette Einheit vorgruppiert werden. Je nach Fahrzeugtyp und -ausstattung wird der Gitterrahmen bedarfsgerecht mit Außenhaut- und/oder Funktionsbauteilen bestückt. Der eigentliche Gitterrahmen besteht aus einer steifen Tragstruktur mit verschiedenen Rahmenteilen, die längs-, vertikal-, quer oder diagonal zur Längsrichtung des Nutzfahrzeugs ausgereichtet und gerade oder, beispielsweise im Bereich der Radhäuser, gebogen ausgeführt sind. Der Gitterrahmen ist aus hochfestem Aluminium-Druckguss oder einem Faserverbundwerkstoff hergestellt.

Aus der DE 103 35 031 A1 ist ferner ein Tragrahmen für ein Nutzfahrzeug, insbesondere eine Sattelzugmaschine, bekannt, der über ein Vorderteil, ein Mittelteil sowie ein Heckteil verfügt. Die beschriebene technische Lösung zeichnet sich dadurch aus, dass das Mittelteil fachwerkartig mit wenigstens zwei Ober- und wenigstens zwei Untergurten aufgebaut ist. Das Mittelteil verfügt in Fahrzeuglängsrichtung über einen kastenförmigen Querschnitt, während das Vorder- sowie das Hinterteil leiterrahmenartig ausgeführt und jeweils über geeignete Befestigungselemente mit dem Mittelteil verbunden sind.
Wesentlich für das fachwerkartig ausgebildete Mittelteil ist, dass auf geeignete Weise Funktionselemente, wie beispielsweise Elemente einer Abgasnachbehandlungsanlage und/oder ein großer Kraftstofftank, an diesem befestigt werden können. Gegenüber Sattelzugmaschinen, die die herkömmlichen, durchgängigen Rahmenlängsträger aufweisen, soll durch die beschriebene dreiteilige Ausführung des Rahmens mit einem fachwerkartigen Mittelteil sichergestellt werden, dass mehr Platz zur Unterbringung von insbesondere großvolumigen Funktionselementen zur Verfügung steht.

Neben der sicheren und komfortablen Lagerung eines Nutzfahrzeugfahrerhauses, insbesondere des Fahrerhauses einer Sattelzugmaschine, besteht ein Ziel bei der Entwicklung von Nutzfahrzeugfahrerhäusern darin, Wank- oder Nickbewegungen während des Bremsvorgangs zu minimieren. In Ergänzung zu den zuvor beschriebenen unterschiedlichen Möglichkeiten einer Fahrerhauslagerung ist es in diesem Zusammenhang beispielsweise aus der DE 38 13 555 A1 bekannt, bei einem Nutzfahrzeugfahrerhaus in Fahrzeuglängsrichtung verlaufende Torsionsstäbe vorzusehen. Hierbei werden die Torsionsstäbe an den Rahmenlängsträgern befestigt und als Torsionsstabilisatoren ausgebildet, um die um die Fahrerhausquerachse stattfindende Nickbewegung des Fahrzeugs, die etwa beim Anfahren oder Bremsen auftritt, zu vermindern.

Ausgehend von den aus dem Stand der Technik bekannten technischen Lösungen liegt der Erfindung die Aufgabe zugrunde, eine Fahrerhauslagerung anzugeben, mit der eine besonders schwingungsarme, komfortable Lagerung eines Sattelzugmaschinenfahrerhauses realisierbar ist. Insbesondere soll auf vorteilhafte Weise eine Schwingungsentkopplung zwischen dem Fahrzeugfahrgestell und dem Fahrerhaus erfolgen. Die anzugebende technische Lösung soll mit bekannten Konstruktionselementen auf verhältnismäßig einfache und kostengünstige Weise zu realisieren sein und gleichzeitig einen hohen Fahrkomfort und Fahrsicherheit bieten. Weiterhin soll die Lagerung des Fahrerhauses einer Sattelzugmaschine derart weitergebildet werden, dass an den einzelnen Lagerpunkten vergleichsweise klein zu dimensionierende Fahrerhauslager einsetzbar sind. Darüber hinaus soll es die anzugebende Fahrerhauslagerung ermöglichen, möglichst eine Vielzahl der bei der Fahrzeugmontage verbauten Komponenten bereits in einem Vorgruppierungsbereich am Fahrerhaus bzw. einer Tragstruktur des Fahrerhauses zu befestigen.

Die vorstehende Aufgabe wird mit einer Fahrerhauslagerung gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist die Lagerung eines Fahrerhauses einer Sattelzugmaschine, das eine Tragstruktur und eine mit dieser verbundene Kabine aufweist, mit wenigstens zwei in einem vorderen Bereich und zwei in einem hinteren Bereich des Nutzfahrzeugfahrerhauses angeordneten Lagerelementen, über die das Fahrerhaus mit einer Tragstruktur mittelbar oder unmittelbar mit einem Fahrgestellrahmen verbunden ist, derart weitergebildet worden, dass die hinteren Lagerelemente in Fahrtrichtung der Sattelzugmaschine hinter einer Rückwand des Fahrerhauses angeordnet sind.

Die Erfindung zeichnet sich somit vor allem dadurch aus, dass die üblicherweise im Bereich der Hinterkante des Fahrerhauses vorgesehene hintere Fahrerhauslagerung in einen Bereich hinter der Rückwand des Fahrerhauses bzw. der Hinterkante des Fahrerhauses verlagert wird. Vorzugsweise wird hierbei das Fahrerhaus bzw. zumindest eine Tragstruktur des Fahrerhauses bis in einen Bereich der Sattelkupplung nach hinten verlagert. Auf besonders geeignete Weise werden die hinteren Lagerelemente auf einer gedachten Achse, die quer zur Fahrzeuglängsrichtung und durch einen zentralen Bereich der Sattelkupplung verläuft, angeordnet.

Aufgrund der erfindungsgemäßen Anordnung der Lagerelemente ist der Abstand zwischen den vorderen und den hinteren Lagerelementen vergleichsweise groß. Dieser Abstand zwischen den vorderen und den hinteren Lagerelementen führt dazu, dass die Reaktionskräfte zwischen den Lagern klein gehalten werden und beispielsweise ein Moment, das beim Bremsen zu einer Nickbewegung des Fahrerhauses führen würde, durch die Länge der Lagerbasis optimal abgestützt wird. Eine derartige Abstützung der auftretenden Momente führt wiederum zu geringen Lagerkräften.

Erfindungsgemäß ist wenigstens eines der Lagerelemente als Feder-Dämpfereinheit ausgeführt. Ebenso ist es denkbar, im Bereich der Lagerelemente Luftfedern, Spiralfedern, Luftfederbeine oder Spiralfederbeine vorzusehen oder derartige Bauteile in der Feder-Dämpfereinheit vorzusehen. Aufgrund der, vor allem im Bereich der hinteren Lagerelemente, auftretenden geringen Kräften werden an den hinteren Lagerelementen weiche Molekularlager eingesetzt. Da aufgrund der breiten Lagerbasis zwischen den vorderen und hinteren Lagerelementen die Winkelauslegung des Fahrerhauses in den hinteren Fahrerhauslagern bei gleichem Federweg vergleichsweise klein ist, müssen die hinteren Lagerelemente nur kleine Winkelauslenkungen ermöglichen, was wiederum eine weitgehend freie Gestaltung der hinteren Lagerelemente ermöglicht. Insbesondere müssen diese nicht zwingend als Rundlager ausgeführt sein.

Bedingt durch die Weichheit und die Freiheit bei der Gestaltung der hinteren Lagerelemente werden diese bevorzugt weitgehend dämpfend ausgelegt, und zwar sowohl hinsichtlich des akustisch als auch des haptisch wahrnehmbaren Frequenzbereichs. Aufgrund der bevorzugten Kombination von weichen hinteren Lagerelementen im Bereich der Sattelkupplung einerseits und der damit verbundenen breiten Lagerbasis andererseits, wird eine optimale Entkopplung des Fahrerhauses vom Fahrgestell in Bezug auf auftretende Schwingungen erreicht. Insbesondere eine Übertragung von Schwingungen des vergleichsweise schweren Sattelanhängers bzw. Aufliegers über die Sattelkupplung und das Fahrgestell bzw. den Fahrgestellrahmen auf das Fahrerhaus wird auf diese Weise weitgehend vermieden. Die üblicherweise im Fahrerhaus einer Sattelzugmaschine wahrnehmbaren Längsstöße treten bei einer erfindungsgemäß ausgeführten Fahrerhauslagerung daher nicht auf.

In einer vorteilhaften Weiterbildung der Erfindung sind die vorderen Lagerelemente ferner derart ausgeführt, dass durch diese zumindest teilweise sowohl Vertikal- als auch Querkräfte aufnehmbar sind. Vorzugsweise sind in diesem Fall die vorderen Fahrerhauslagerelemente schräg in Richtung einer Fahrzeug-Längsmittenachse angestellt. Auf diese Weise übernehmen die vorderen Lagerelemente zusätzlich zu ihrer Vertikalführung eine Querführungsfunktion für die an ihnen befestigte Tragstruktur und die damit verbundene Kabine. Das Nutzfahrzeugfahrerhaus wird somit durch derartig ausgeführte vordere Lagerelemente zumindest teilweise auch seitlich geführt.

Gemäß einer weiteren speziellen Ausführungsform ist vorgesehen, dass im vorderen Bereich des Nutzfahrzeugfahrerhauses wenigstens ein Element angeordnet ist, durch das das Fahrerhaus seitlich geführt ist. Ein derartiges Element stellt somit eine seitliche Abstützung des Nutzfahrzeugfahrerhauses dar und nimmt entsprechende Seitenkräfte auf. Die entsprechende seitliche Abstützung kann über einen Panhardstab, ein Wattgestänge, eine Schwinge und/oder die vordere Fahrerhauslagerung erfolgen. Alternativ oder in Ergänzung können im vorderen Bereich der Fahrerhauslagerung eine Schwinge und/oder ein Stabilisator vorgesehen sein, der das Nutzfahrzeugfahrerhaus gegen eine Wankbewegung abstützt.

In einer vorteilhaften Weiterbildung verfügt eine erfindungsgemäß ausgeführte Lagerung über wenigstens ein vorderes Lagerelement, das eine quer zur Fahrtrichtung angeordnete Blattfeder aufweist. Durch eine derartige Ausführung wenigstens eines der vorderen Lagerelemente werden ebenfalls seitliche Bewegungen bzw. Wankbewegungen des Fahrerhauses abgefedert.

Darüber hinaus sieht eine bevorzugte Weiterbildung der Erfindung vor, dass zumindest ein Außenhaut- und/oder ein Funktionsbauteil in die Tragstruktur des Fahrerhauses integriert oder an dieser befestigt ist. Auf vorteilhafte Weise können so beispielsweise Kotflügel, Radkästen, Trittstufen und/oder seitliche Verkleidungselemente an der Tragstruktur befestigt bzw. in diese integriert werden. Selbstverständlich ist es ebenso denkbar, Funktionselemente, wie etwa Teile einer Abgasnachbehandlungsanlage, Tanks und / oder Staufächer, in die Tragstruktur zu integrieren bzw. an dieser zu befestigen. Dies bietet insbesondere für die Fahrerhaus- bzw. Nutzfahrzeugmontage den Vorteil, dass eine derartige Tragstruktur mit den daran zur Befestigung vorgesehenen Elementen jenseits des Hauptmontagebandes als vollständiges Modul vorgruppierbar ist.

Um bei einer Wartung oder einer Reparatur die unterhalb des Fahrerhauses angeordneten Fahrzeugteile erreichen zu können ist ein erfindungsgemäß ausgeführtes Fahrerhaus einer Sattelzugmaschine um eine Kippachse kippbar ausgeführt. Das Kippen des Fahrerhauses erfolgt entweder in bekannter Weise um die vorderen Lagerelemente, insbesondere um eine Achse, die diese Lager durchquert, nach vorne oder aber das Fahrerhaus wird nach hinten um eine gedachte, durch die hinteren Lagerelemente verlaufende Achse gekippt. Alternativ oder in Ergänzung ist es denkbar, dass das Fahrerhaus während des Kippvorgangs, insbesondere zu Beginn, in Längsrichtung des Fahrerhauses verschoben wird, um ein Abkuppeln des Sattelanhängers bzw. Aufliegers für den Kippvorgang zu vermeiden. Je nach konstruktiver Gestaltung des Fahrerhauses wird eine Frontklappe des Fahrerhauses, hinter der sich vergleichsweise oft benötigte Wartungsstellen, wie etwa ein Stutzen für den Ölmessstab sowie ein Vorratsbehälter für Scheibenwaschwasser, befinden, vor einem Kippvorgang entweder manuell oder automatisch geöffnet.

In einer weiteren speziellen Ausführungsform ist das Nutzfahrzeugfahrerhaus zweiteilig ausgeführt und besteht aus einer Tragstruktur und einer Kabine, die im Bedarfsfall zumindest bereichsweise voneinander trennbar sind. Auf vorteilhafte Weise ist hierfür wenigstens ein Scharnierelement zwischen der Tragstruktur und der Kabine vorgesehen, durch das die Kabine relativ zur Tragstruktur bewegbar ist. Vorzugsweise weist das Scharnier zwischen Tragstruktur und Kabine ein Molekularlager oder ein Drehlager auf. In Ergänzung ist wenigstens ein Schloss vorgesehen, mit dem während der Fahrt die Kabine zuverlässig auf der Tragstruktur arretiert ist. Ebenso ist es denkbar, mehrere Schlösser vorzusehen, die die Kabine auf der Tragstruktur zuverlässig arretieren. Vorzugsweise sind die Schlösser derart ausgeführt, dass ein Bolzen in dem Schloss arretiert und bei Bedarf aus diesem entfernbar ist. Der Kippvorgang eines Nutzfahrzeugfahrerhauses oder der Kabine wird auf vorteilhafte Weise hydraulisch bzw. elektrohydraulisch unterstützt.

Bei der erfindungsgemäß ausgeführten Lagerung eines Fahrerhauses einer Sattelzugmaschine sind grundsätzlich zwei unterschiedliche Anordnungen der Lagerelemente denkbar. Einerseits ist es denkbar, die Lagerelemente, die vorzugsweise über wenigstens ein Federelement und/oder eine Dämpfereinheit verfügen, im vorderen Bereich zwischen dem Fahrgestellrahmen und dem Nutzfahrzeugfahrerhaus anzuordnen. Auf diese Weise wird der Abstand zwischen dem Fahrerhaus und den am Fahrzeugrahmen vorgesehenen Teilen klein gehalten.

Gemäß einer alternativen Ausführungsform sind die Lagerelemente, die das Nutzfahrzeugfahrerhaus abstützen, direkt an einem Achskörper oder einem anderen, ein Fahrzeugrad führenden Bauelement, beispielsweise an einer Einzelradaufhängung, befestigt. Mit einer derartigen Ausführungsform kann eine optimale akustische Entkopplung zwischen Fahrerhaus und Fahrgestell erreicht werden. Darüber hinaus wird das Nicken des Fahrzeugchassis, das beispielsweise aus einem Bremsmoment resultiert, nur noch in geringem Maß auf das Fahrerhaus übertragen. Insbesondere nähert sich bei einer Bremsung das Nutzfahrzeugfahrerhaus nur soweit der Fahrbahn, wie es durch die vordere Federung zugelassen wird. Das Bremsen führt somit nicht zwangsläufig zu einer Verneigung der Kabine vor dem vorausfahrenden Fahrzeug, sondern wird nur als Bremsbeschleunigung von den Fahrzeuginsassen wahrgenommen.
Weiterhin wird durch eine derartige Anordnung der Lagerelemente das Nutzfahrzeugfahrerhaus in Bezug auf die Durchbiegung des Fahrgestellrahmens entkoppelt. Während zwischen dem Fahrgestellrahmen und dem Nutzfahrzeugfahrerhaus angeordnete Lagerelemente mit Federn eine Vertikalbewegung aufgrund der Biegung des Fahrzeugrahmens im vorderen Bereich auf das Fahrerhaus übertragen, kann die Übertragung einer entsprechende Bewegung bei Anordnung der Fahrerhausfedern zwischen Kabine und Fahrzeugrad führenden Teilen zuverlässig vermieden werden.

Im Folgenden wird die Erfindung ohne Beschränkung des allgemeinen Erfindungsgedankens anhand von Ausführungsbeispiele unter Bezugnahme auf die Figuren näher erläutert. Es zeigen:
- Figur 1:: Sattelzugmaschine;
- Figur 2:: Tragstruktur mit Kabine eines Nutzfahrzeugfahrerhauses und Darstellung der Lagerachse einer Sattelkupplung;
- Figur 3:: Tragstruktur mit Kabine eines Nutzfahrzeugfahrerhauses mit Darstellung der Kippachse eines Fahrerhauses;
- Figur 4:: Tragstruktur mit Kabine eines Nutzfahrzeugfahrerhauses und Fahrgestell einer Sattelzugmaschine;
- Figur 5:: Sattelzugmaschine in Seitenansicht mit einer erfindungsgemäß ausgeführten Fahrerhauslagerung;
- Figur 6:: Sattelzugmaschine in Seitenansicht mit einer erfindungsgemäß ausgeführten Fahrerhauslagerung in nach vorne gekipptem Zustand des Fahrerhauses;
- Figur 7:: Sattelzugmaschine in Seitenansicht mit einer erfindungsgemäß ausgeführten Fahrerhauslagerung in nach hinten gekipptem Zustand des Fahrerhauses;
- Figur 8:: Tragstruktur einer erfindungsgemäß ausgeführten Fahrerhauslagerung einer Sattelzugmaschine;
- Figur 9:: Tragstruktur einer erfindungsgemäß ausgeführten Lagerung eines Sattelzugmaschinenfahrerhauses in einer Ansicht schräg von hinten;
- Figur 10:: Tragstruktur und Fahrgestellrahmen einer erfindungsgemäß ausgeführten Fahrerhauslagerung in einer Draufsicht;
- Figur 11:: Fahrerhaus einer Sattelzugmaschine mit Tragstruktur, Kabine und Frontklappe sowie
- Figur 12:: Fahrerhaus einer Sattelzugmaschine in nach vorne gekipptem Zustand mit Tragstruktur, Kabine und Frontklappe.

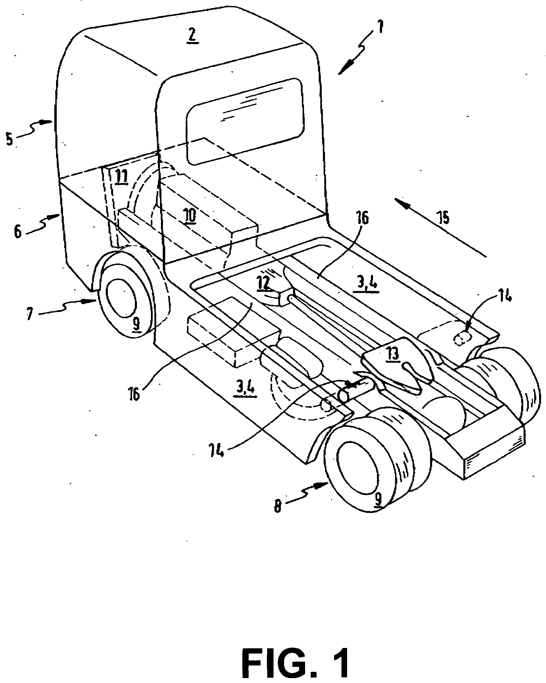

Figur 1 zeigt eine Sattelzugmaschine in einer Ansicht schräg von hinten. Die dargestellte Sattelzugmaschine 1 ist in Frontlenkerbauweise ausgeführt und verfügt über einen Mittelmotor 10, der sich unterhalb des Fahrerhauses 2 befindet. In Fahrtrichtung vor dem Motor 10 ist ein Kühler mit dem erforderlichen Lüfterrad 11 dargestellt. In Fahrtrichtung der Sattelzugmaschine hinter dem Verbrennungsmotor 10 befindet sich ein Getriebe 12, an das ausgangsseitig eine Gelenkwelle angeflanscht ist, die dem Antrieb der Hinterachse 8 dient.

Im hinteren Bereich der Sattelzugmaschine 1 befindet sich die Sattelkupplung 13 mit ihrer Sattelplatte, die der Ankupplung eines Sattelanhängers bzw. Aufliegers dient. Im beladenen Zustand des Sattelanhängers weist dieser regelmäßig eine größere Masse als die Sattelzugmaschine auf und schwingt somit in Längsrichtung mit einer anderen Frequenz als das leichtere Zugfahrzeug. Hierdurch wird das Zugfahrzeug vom Sattelanhänger ständig beschleunigt, so dass es zu Längsstößen kommt, die im Fahrerhaus 2 oftmals als störend empfunden werden.

Das Fahrgestell der Sattelzugmaschine 2 verfügt über zwei in Fahrzeuglängsrichtung verlaufende, parallel angeordnete Rahmenlängsträger 16, zwischen denen insbesondere der Kühler 11, der Verbrennungsmotor 10, das Getriebe 12 sowie die Gelenkwelle mit dem Gelenkwellenabtrieb angeordnet sind.

Je nach Ausführung der Fahrerhauslagerung sind die hierfür vorgesehenen Lagerelemente 25, 27 mittelbar oder unmittelbar mit den Rahmenlängsträgern 16 verbunden. Das in Figur 1 dargestellte Fahrerhaus 2 einer Sattelzugmaschine verfügt im Wesentlichen über eine Tragstruktur 6 sowie eine mit dieser verbundene Kabine 5, in der sich der Fahrerarbeitsplatz, der Beifahrerplatz sowie in Abhängigkeit der Ausführung des Fahrerhauses zumindest ein Schlafplatz befindet. Die Tragstruktur 6 des Fahrerhauses 2 ist über zwei vordere 25 sowie zwei hintere Lagerelemente 27 mit dem Fahrgestellrahmen 16 der Sattelzugmaschine 1 verbunden. In die Tragstruktur 6 sind sowohl auf der linken als auch auf der rechten Seite Seitenverkleidungselemente 3, 4 integriert. Im vorderen Bereich verfügen die Verkleidungselemente 3, 4 über Ausschnitte, die der Form der Radhäuser, in denen sich die Fahrzeugräder 9 befinden, angepasst sind.
Die Vorderräder 9 sind über eine Einzelradaufhängung 26, die ebenfalls mit dem Fahrzeugrahmen 16 verbunden ist, angelenkt, während die Hinterräder 9 an einer angetriebenen Hinterachse befestigt sind. Die erfindungsgemäße Ausführung eines Fahrerhauses 2 einer Sattelzugmaschine 1, das eine Tragstruktur 6 und eine Kabine 5, die über geeignete Lagerelemente 25, 27 mit dem Fahrgestellrahmen verbunden sind, aufweist, wird im Zusammenhang mit den folgenden Figuren näher erläutert.

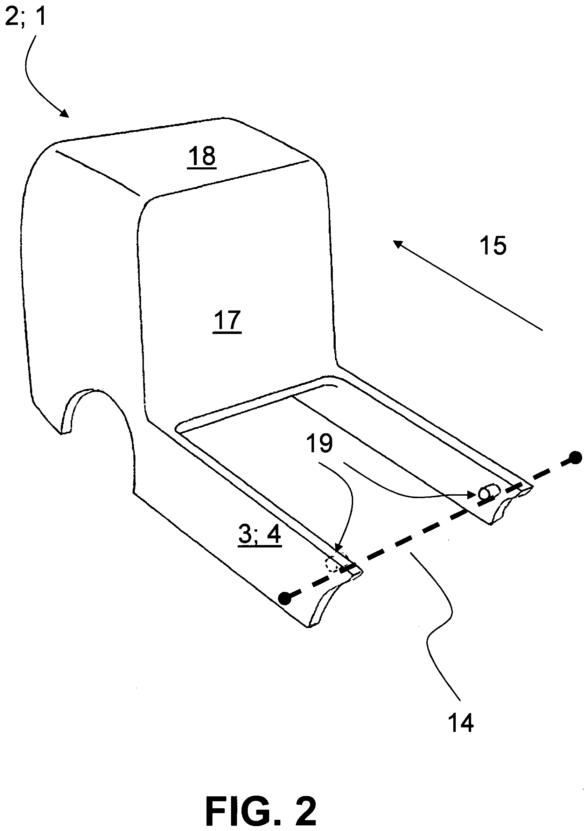

Figur 2 zeigt in einer schematischen Ansicht das Fahrerhaus 2 einer Sattelzugmaschine 1, das als wesentliche Komponenten über eine Tragstruktur 6 und eine daran befestigte Kabine 5 verfügt. Die Kabine 5 weist eine Rückwand 17 sowie ein Dach 18 auf, während die Seitenverkleidungselemente 3, 4 in die Tragstruktur 6, die die Kabine des Nutzfahrzeugfahrerhauses trägt, integriert sind. Im hinteren Bereich der Tragstruktur 6 ist strichliniert die quer zur Fahrtrichtung 15 verlaufende Achse 14 eingezeichnet, die die Sattelkupplung 13 in ihrem zentralen Bereich, nämlich in ihrem Anbindungspunkt an den Königszapfens des Sattelanhängers durchquert. Deutlich zu erkennen ist, dass das Nutzfahrzeugfahrerhaus 2, insbesondere dessen Tragstruktur 6, bis in den Bereich der Sattelkupplung hineinragt. Im hinteren Bereich der Tragstruktur 6 mit der daran befestigten Seitenverkleidung 3, 4 sind die Anlenkungspunkte 19 der hinteren Lagerelemente 27 des Nutzfahrzeugfahrerhauses 1 dargestellt. Im Bereich der Anlenkungspunkte 19 wird die Tragstruktur 19 und somit das Nutzfahrzeugfahrerhaus 2 über die hinteren Lagerelemente 27 mit dem Fahrgestell bzw. zumindest mittelbar mit dem Fahrgestellrahmen verbunden. Die Anlenkungspunkte 19 befinden sich in Fahrtrichtung 15 der Sattelzugmaschine 1 nahezu am Ende der Tragstruktur 6. Die hinteren Lagerelemente 27 sind somit im Bereich der Sattelplatte 13 auf einer gedachten Achse 14, die die Sattelkupplung 13 in ihrem zentralen Bereich durchquert, angeordnet. Wie im Folgenden noch eingehend erläutert werden wird, können für die hinteren Lagerelemente 27 vergleichsweise kleine, weiche Lager verwendet werden, da die Auslenkungen in diesem Bereich aufgrund des großen Abstands zwischen vorderen und hinteren Lagerelementen 25, 27 klein sind. Bevorzugt eignet sich hierbei die Verwendung sogenannter Molekularlager.

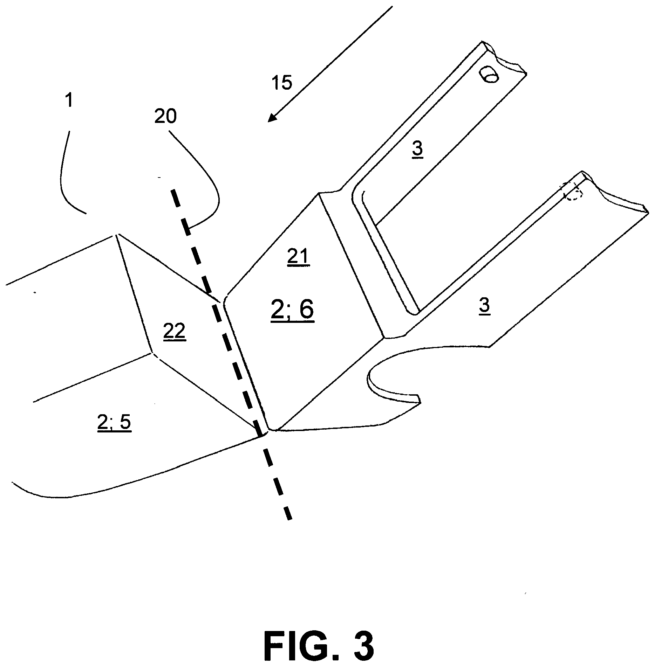

In Ergänzung zu Figur 2 zeigt Figur 3 das Fahrerhaus 2 einer Sattelzugmaschine 1, das aus einer Tragstruktur 6 sowie einer Kabine 5 besteht, wobei sich die Kabine 5 gegenüber der Tragstruktur 6 in gekipptem Zustand befindet. Das Kippen eines Nutzfahrzeugfahrerhauses 2 bzw. der Kabine 5 ist immer dann erforderlich, wenn an unterhalb des Nutzfahrzeugfahrerhauses 2 angeordneten Fahrzeugkomponenten, bspw. am Motor 10, Wartungs- oder Reparaturarbeiten durchgeführt werden sollen.
In Figur 3 ist die Kabine 5 um die quer zur Längsrichtung 15 der Sattelzugmaschine 1 verlaufende Kippachse 20 nach vorne gekippt. Hierbei hebt sich der Kabinenboden 22 von der Tragstruktur 6 ab, so dass über die Öffnung 21 Wartungspunkte unterhalb des Kabinenbodens 22, insbesondere der Verbrennungsmotor 10, zugänglich sind.

Das in Figur 3 dargestellte Fahrerhaus 2 einer Sattelzugmaschine 1 ist zweiteilig ausgeführt, wobei die Kabine 5 gegenüber der Tragstruktur 6 um die Kippachse 20 nach vorne gekippt werden kann. Um eine entsprechende Kippbewegung um die Kippachse 20 realisieren zu können, sind im vorderen Bereich der Tragstruktur 6 Scharnierelemente vorgesehen, über die die Tragstruktur 6 beweglich mit der Kabine 5 verbunden ist. Im hinteren Bereich der Kabine 5 im Bereich der Hinterkante sind geeignete Schlösser vorgesehen, in die in nicht gekipptem Zustand der Kabine 5 entsprechende Bolzen einrasten, so dass die Kabine während des Betriebs der Sattelzugmaschine 1 sicher auf der Tragstruktur 6 arretiert ist.

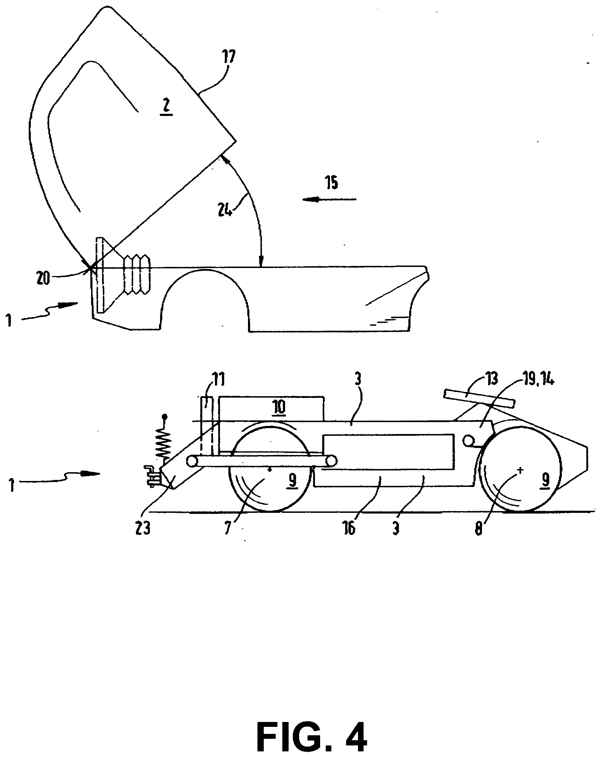

Figur 4 zeigt in einer Ansicht das aus Tragstruktur 6 und Kabine 5 bestehende Fahrerhaus 2 einerseits sowie das Fahrgestell einer Sattelzugmaschine 1 andererseits. Das Fahrerhaus 2 befindet sich in einem Betriebszustand, in dem die Kabine 5 gegenüber der Tragstruktur 6 um die Kippachse 20 derart nach vorne gekippt ist, dass die Kabine 5 um den Kippwinkel 24 gegenüber der Oberkante der Tragstruktur 6 geneigt ist.
Im unteren Bereich der Figur 4 ist in Ergänzung schematisch das Fahrgestell einer Sattelzugmaschine 1 dargestellt, das unter anderem der Aufnahme des Fahrerhauses 2 dient. Das Fahrgestell verfügt über die Rahmenlängsträger 16, zwischen denen sich der Motor 10 sowie der Kühler 11 befindet. An den vorderen Enden der Rahmenlängsträger 16, im Bereich des sogenannten Frontends, ist ein Frontunterfahrschutz 23 vorgesehen, an dem eine Abschleppöse sowie ein Federdämpferelement befestigt sind.

Im hinteren Bereich des Fahrgestells ist die Sattelkupplung 13 mit Hilfe geeigneter Verbindungselemente mit dem Fahrgestellrahmen verbunden. Die quer zur Fahrzeuglängsrichtung 15 ausgerichtete Achse 14 verläuft wiederum durch den zentralen Kupplungspunkt der Sattelkupplung 13 und zwar in Normalenrichtung zur Bildebene.

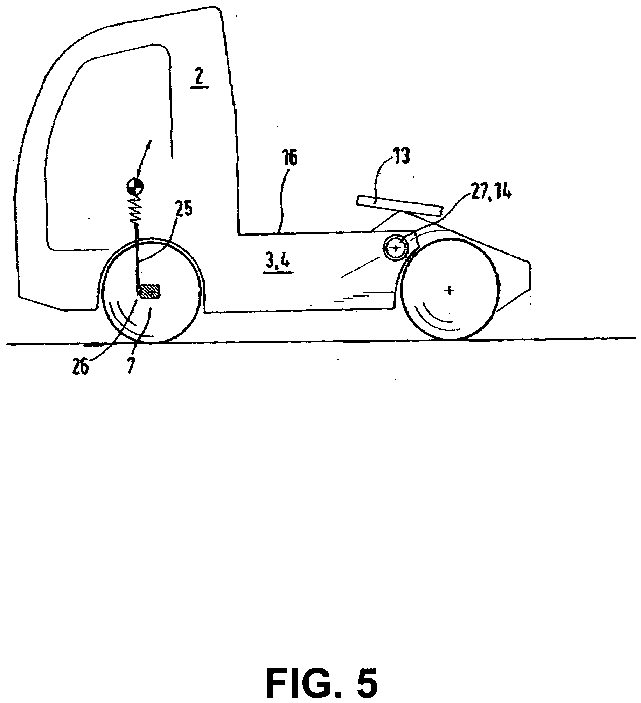

Im hinteren Bereich des Seitenverkleidungselements 3, das Teil der Tragstruktur 6 ist, befindet sich das hintere Lagerelement 27 zur Befestigung des Nutzfahrzeugfahrerhauses 2 am Fahrgestellrahmen. In Ergänzung zu Figur 4 zeigt Figur 5 die Sattelzugmaschine 1, nachdem das Fahrerhaus mit seiner Kabine 5 und der Tragstruktur 6 auf das Fahrgestell mit Sattelkupplung und Antriebstrang aufgesetzt worden ist. Das Nutzfahrzeugfahrerhaus 2 ist über vier Lagerelemente zumindest mittelbar mit dem Fahrgestellrahmen verbunden. Im Bereich der Vorderachse 7 ist ein vorderes Lagerelement 25 vorgesehen, das als Teil einer Feder-Dämpfer-Einheit ein Federelement aufweist und das an einem Rad führenden Element 26 einer Einzelradaufhängung oder einer dazu alternativen Radführungseinrichtung der Sattelzugmaschine befestigt ist. Das vordere Lagerelement 25 nimmt insbesondere Vertikalkräfte auf und ermöglicht durch das Federelement eine Vertikalbewegung des Fahrerhauses 2. Das vordere Lagerelement 25 stellt somit eine Komponente der vier zumindest mittelbaren Befestigungen des Nutzfahrzeugfahrerhauses am Fahrgestellrahmen dar.
Das Fahrerhaus stützt sich direkt über das Feder-Dämpfer-Element des vorderen Lagerelements 25 auf der Einzelradaufhängung 26 der Vorderräder 9 ab. Durch diese Anordnung der vorderen Lagerelemente 25 kann eine optimale akustische Entkopplung zwischen Fahrgestellrahmen und Fahrerhaus 2 bzw. Kabine 5 erreicht werden. Darüber hinaus wird das Nikken des Fahrgestellrahmens, das etwa aus einem Bremsmoment resultiert, noch weniger auf die Kabine übertragen. Nickbewegungen des Fahrerhauses werden auf diese Weise minimiert und das Fahrerhaus nähert sich der Fahrbahn nur soweit, wie es die vordere Federung zulässt.

Im hinteren Bereich des Nutzfahrzeugfahrerhauses 2 im Bereich der Sattelkupplung 13, insbesondere im Bereich der gedachten Querachse 14, sind beidseitig der Sattelkupplung hintere Lagerelemente 27 vorgesehen, die vorzugsweise als Molekularlager ausgeführt sind. Durch die in Figur 5 deutlich zu erkennende, vergleichsweise lange Abstützung zwischen vorderer und hinterer Fahrerhauslagerung 25, 27 werden die Reaktionskräfte in den Lagern klein gehalten. Ein Moment, das beim Bremsen zu einer Nickbewegung des Fahrerhauses 2 führen würde, wird durch die Länge der Lagerbasis optimal abgestützt und führt so zu geringen Lagerkräften. Eine entsprechende Anordnung der Fahrerhauslager 25, 27 ermöglicht, dass zumindest die hinteren Fahrerhauslager 27 aus sehr weichen Molekularlagern bestehen. Darüber hinaus führt die breite Lagerbasis zu einer Minimierung der Winkelauslenkung des Fahrerhauses 2 bei gleichem Federweg. Die hinteren Lager 27 müssen daher nur kleine Winkelauslenkungen ermöglichen und können weitgehend frei gestaltet werden. Insbesondere müssen die hinteren Lagerelemente 27 nicht zwingend als Rundlager ausgeführt werden. Bedingt durch ihre Weichheit und die Freiheit der Gestaltung können die hinteren Lagerelemente 27 in hohem Maße dämpfend ausgelegt werden, und zwar sowohl bezüglich des akustischen als auch des haptisch wahrnehmbaren Frequenzbereichs.

Die vorderen Lagerelemente 25 ermöglichen darüber hinaus dem Fahrerhaus 2 einen ausreichenden vertikalen Federweg, um so die Vertikalstöße aus dem Fahrzeugchassis oder der Achse 7 aufzunehmen und von der Kabine 5 abzuhalten. Aufgrund der Kombination weicher Lager 27 im Bereich der Sattelkupplung 13 mit der vergleichsweise breiten Lagerbasis, wird eine optimale schwingungstechnische Entkopplung des Fahrerhauses 2 vom Fahrgestell erreicht. Gegenüber den bekannten Lagerungen von Sattelzugmaschinenfahrerhäusern bietet die dargestellte Anordnung und Ausführung der Lagerelemente 25, 27 ferner den Vorteil, dass im Fahrerhaus nahezu keine Stöße wahrnehmbar sind, die durch das Schwingen des Sattelanhängers in Längsrichtung 15, der in beladenem Zustand schwerer als die Zugmaschine ist, hervorgerufen werden. Der Fahrkomfort sowie die Fahrsicherheit werden somit auf diese Weise erhöht. Insbesondere ist die Kabine 5 aufgrund der dargestellten Anordnung nahezu vollständig von der Winkelauslegung des Fahrgestellrahmens entkoppelt. Durch die Lageranordnung schwingt die Kabine in Längsrichtung gemeinsam mit dem Sattelanhänger und dessen Frequenz. Die Beschleunigung des Chassis ist daher in der Kabine nicht zu spüren. Auf diese Weise wird eine vibrationsarme und sehr leise Kabine realisiert.
Ein weiterer Vorteil der gewählten Lageranordnung besteht darin, dass aufgrund der geringen Beeinflussung des Fahrerhauses durch Bewegungen des Fahrgestellrahmens dieser aus hochfesten Materialien mit großer Durchbiegung und damit sehr leicht gestaltet werden kann.

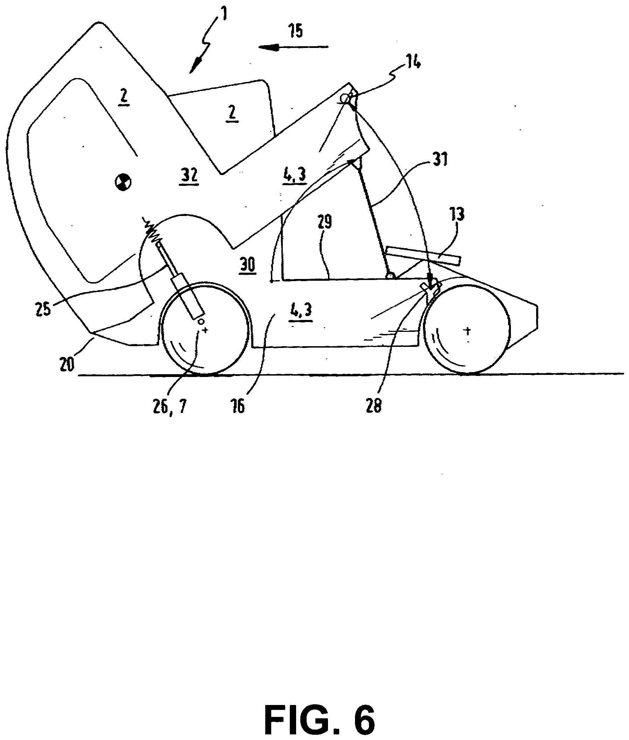

Figur 6 zeigt eine Sattelzugmaschine 1 mit einem Fahrerhaus 2, das eine Tragstruktur 6 sowie eine Kabine 5 aufweist. In dem gezeigten Ausführungsbeispiel ist das gesamte Nutzfahrzeugfahrerhaus 2 um die Kippachse 20 nach vorne gekippt. Das Nutzfahrzeugfahrerhaus 2 verfügt erneut über erfindungsgemäß angeordnete vordere sowie hintere Lagerelemente 25, 27, so dass die Tragstruktur 5 des Fahrerhauses 2 bis in einen Bereich der Sattelkupplung 13 reicht.

Das Nutzfahrzeugfahrerhaus 2 ist um den Kippwinkel 24 gegenüber der Oberkante der Rahmenlängsträger 16 nach vorne gekippt. Um ein Kippen des Nutzfahrzeugfahrerhauses 2 zu ermöglichen, werden entsprechende Arretierungen 28 im hinteren Bereich der Tragstruktur 6 geöffnet, so dass die an der Tragstruktur 6 befestigten Bolzen aus dem Schloss ausgleiten können. Um während der Wartung der Sattelzugmaschine 1 ein Zurückkippen des Fahrerhauses 2 zuverlässig zu vermeiden, ist eine Stütze 31 vorgesehen, die zwischen der Tragstruktur des Nutzfahrzeugfahrerhauses und dem Fahrgestellrahmen eingeklemmt wird.

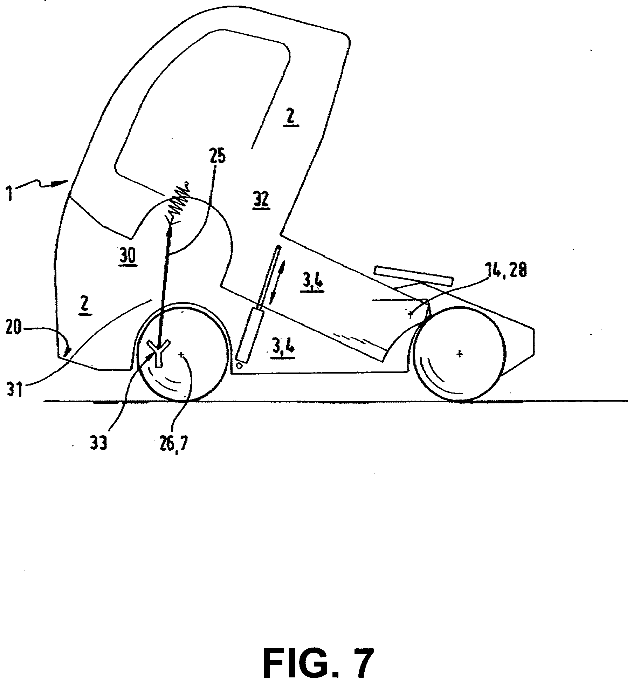

Im Gegensatz zu Figur 6 zeigt Figur 7 eine Sattelzugmaschine mit einer erfindungsgemäß ausgeführten Lagerung eines Nutzfahrzeugfahrerhauses 2, das um die Achse 14 nach hinten kippbar ist. Das Verriegelungsschloss ist hierbei im vorderen Bereich des Nutzfahrzeugfahrerhauses 2 in der Nähe des vorderen Lagerelementes 25 vorgesehen. Das Kippen des Nutzfahrzeugfahrerhauses 2 wird mit Hilfe eines hydraulisch bewegbaren Kippzylinders realisiert. Vor einem Kippen des Fahrerhauses 2 ist es erforderlich, den Sattelanhänger abzukuppeln und das Zugfahrzeug zumindest um ein kleines Stück nach vorne zu fahren.

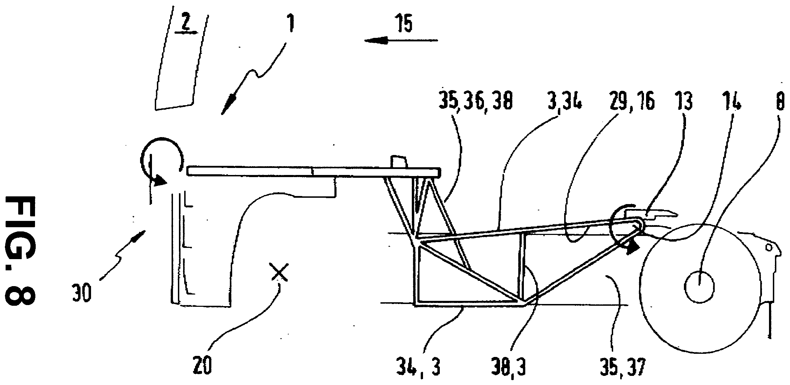

Figur 8 zeigt in einer Seitenansicht die Tragstruktur 6 eines erfindungsgemäß gelagerten Nutzfahrzeugfahrerhauses. Wesentliches Merkmal der dargestellten Tragstruktur 6 ist, dass diese als Gitterrahmen ausgeführt ist. In seiner Gestalt ist der Gitterrahmen dem unteren seitlichen Karosseriebereich angepasst und besteht aus Längsrahmenteilen, Vertikalrahmenteilen, Querrahmenteilen, Diagonalrahmenteilen und insbesondere im Bereich der Radkästen über Bogenrahmenteile die jeweils einen gerundeten Abschnitt aufweisen und so den Rädern 9 angepasste Radausschnitt bilden.

Im hinteren Bereich der Tragstruktur 6 ist das hintere Lagerelement 27 dargestellt, das aufgrund der langen Basis zwischen vorderem und hinterem Lagerelement 25, 27 vergleichsweise kleine Momente aufnehmen muss. Wesentlich ist, dass das hintere Lagerelement 27 im Bereich einer gedachten Querachse 14, die in Querrichtung des Fahrzeugs die Sattelkupplung 13 in einem zentralen Bereich durchquert, angeordnet ist.
Im hinteren Bereich ist die tragende Struktur somit auf Höhe der Sattelkupplung 13 drehbar gelagert. Im vorderen Bereich stützt sie sich auf zwei Federbeinen, die vorzugsweise als Luftfedern aufweisen, ab. Die Kippachse 20 der Kabine 5 liegt zwischen der tragenden Struktur 6 und der Kabine 5.
Um ferner Seitenkräfte aufnehmen zu können, sind zwischen der Tragstruktur 6 und dem Fahrzeugrahmen geeignete Stützelemente, die die Funktion einwertiger Lager bzw. von Pendelstützen übernehmen, vorgesehen. Eine derartige seitliche Abstützung kann beispielsweise durch einen Panhardstab, ein Wattgestänge, eine Schwinge und/ oder aber zumindest teilweise durch die vorderen Lagerelemente 25 erfolgen.

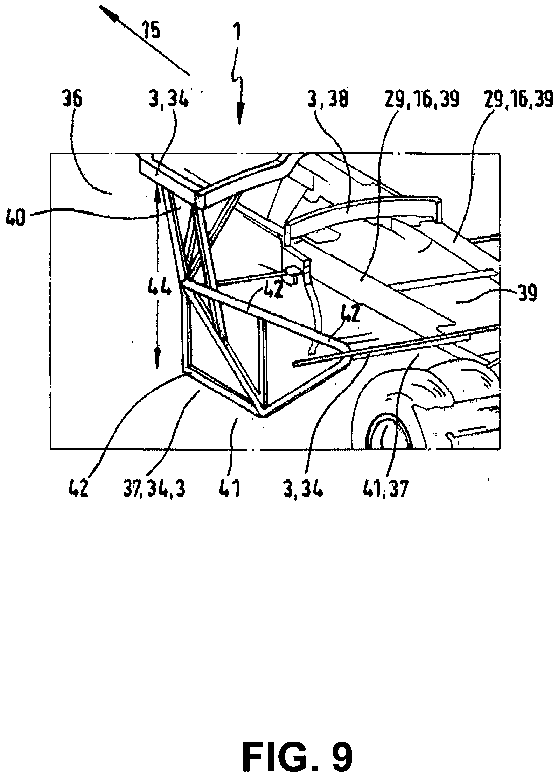

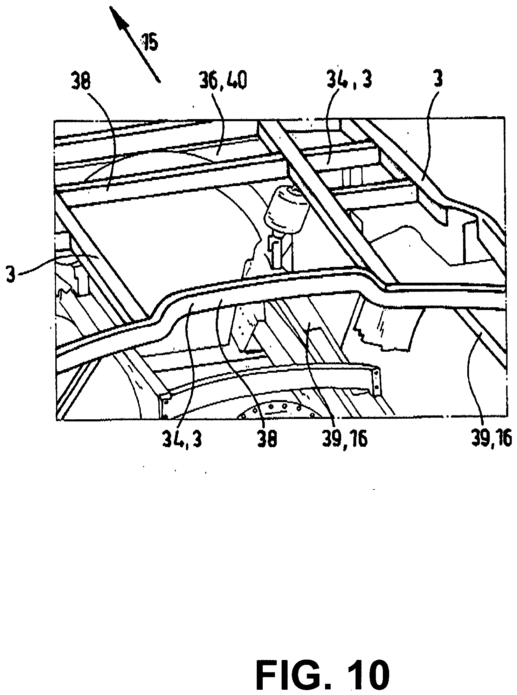

Ergänzend zu der in Figur 8 gezeigten Seitenansicht zeigen die Figuren 9 und 10 die Tragstruktur 6 in einer Schrägansicht sowie einer Draufsicht. Deutlich zu erkennen ist wiederum die Ausführung der Tragstruktur in Form eines fachwerkartigen Gitterrahmens. Die Anlenkung der tragenden Struktur 6 im hinteren Bereich findet wiederum im Bereich der Querachse 14 statt. In Figur 9 ist der vertikale Federweg 44 der Tragstruktur 6 und somit des Nutzfahrzeugfahrerhauses 2 dargestellt.

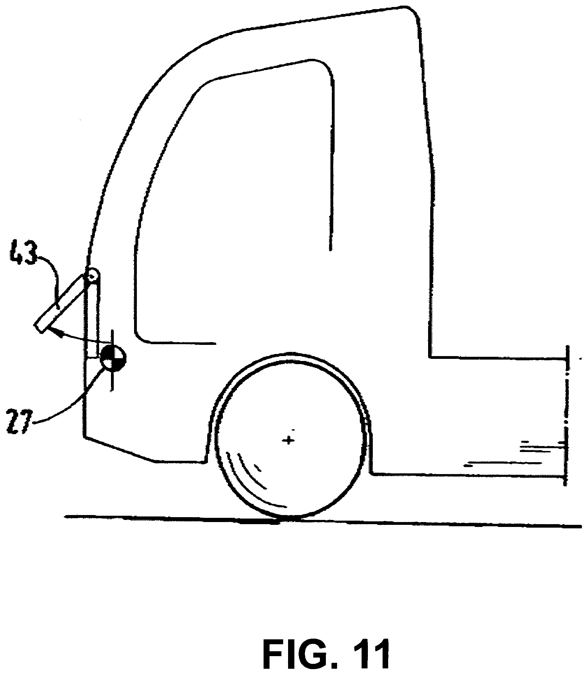

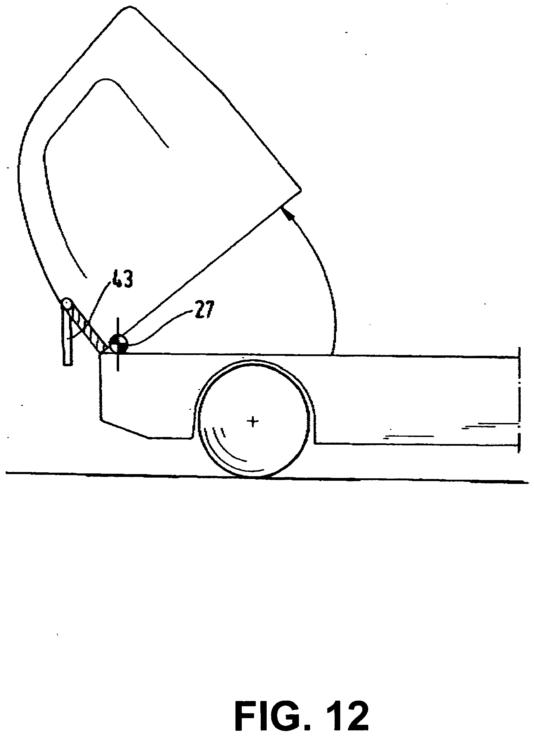

Abschließend zeigen die Figuren 11 und 12 eine Sattelzugmaschine 1, die über ein erfindungsgemäß gelagertes Fahrerhaus 2 verfügt, welches wiederum eine Kabine 5 und eine
Tragstruktur 6 aufweist Die Kabine 5 kann um die Kippachse 20 gegenüber der Tragstruktur 6 nach vorne gekippt werden. In diesem Zusammenhang zeigt Figur 11 die Kabine 5 in nicht gekipptem, auf der Tragstruktur 6 arretiertem Zustand, während Figur 12 die Kabine in nach vorne gekipptem Zustand zeigt.
Um ein sicheres Kippen der Kabine des Nutzfahrzeugfahrerhauses zu ermöglichen, insbesondere um Kollisionen unterschiedlicher Bauteile sicher auszuschließen, wird die im Frontbereich des Fahrerhauses 2 vorgesehene Frontklappe 43 geöffnet, bevor mit dem Kippen des Fahrerhauses 2 begonnen wird.

Wie die obigen Ausführungen zeigen, ermöglicht die erfindungsgemäße Anordnung der vorderen sowie der hinteren Lagerelemente, vor allem der vergleichsweise große Abstand in Längsrichtung der Sattelzugmaschine, die Verwendung besonders weicher Lager, insbesondere im hinteren Bereich, so dass insgesamt eine sehr komfortable und sichere Fahrerhauslagerung realisiert wird. Die erfindungsgemäße Fahrerhauslagerung zeichnet sich hierbei insbesondere durch eine besonders gute Schwingungsentkopplung zwischen Fahrgestell und Fahrerhaus aus.

### Bezugszeichenliste

- 1: Sattelzugmaschine
- 2: Fahrerhaus
- 3: Seitenverkleidung
- 4: Seitenverkleidung
- 5: Kabine
- 6: Tragstruktur
- 7: vordere Radbefestigung
- 8: Hinterachse
- 9: Fahrzeugrad
- 10: Motor
- 11: Kühler mit Lüfter
- 12: Getriebe
- 13: Sattelkupplung
- 14: Querachse
- 15: Fahrzeuglängsrichtung
- 16: Rahmenlängsträger
- 17: Fahrerhausrückwand
- 18: Fahrerhausdach
- 19: Anlenkung der hinteren Lagerungselemente an die Tragstruktur
- 20: Kippachse
- 21: Oberseite der Tragstruktur
- 22: Unterseite der Kabine
- 23: Frontunterfahrschutz
- 24: Kippwinkel
- 25: vorderes Lagerelement
- 26: Rad führendes Element
- 27: hinteres Lagerelement
- 28: hinteres Arretierschloss
- 30: Fahrerhaus in ungekipptem Zustand
- 31: Stützstrebe
- 32: Fahrerhaus in gekipptem Zustand
- 33: vorderes Arretierschloss
- 34: Längsrahmenteil
- 35: Querrahmenteil
- 36: Diagonalrahmenteil
- 37: Bogenrahmenteil
- 38: Vertikalrahmenteil
- 39: Fahrgestell
- 40: seitliche Führung
- 42: Gitterrahmen
- 43: Frontklappe
- 44: vertikaler Federweg

## Patentansprüche

1. Lagerung eines Fahrerhauses (2) einer Sattelzugmaschine (1), das eine Tragstruktur (6) und eine mit dieser verbundene Kabine (5) aufweist, mit wenigstens zwei in einem vorderen Bereich und zwei in einem hinteren Bereich des Fahrerhauses (2) angeordneten Lagerelementen (25, 27), über die das Fahrerhaus (2) mit seiner Tragstruktur (6) mittelbar oder unmittelbar mit einem Fahrgestellrahmen verbunden ist,
wobei die hinteren Lagerelemente (27) in Fahrtrichtung (15) der Sattelzugmaschine (1) hinter einer Rückwand (17) des Fahrerhauses (2) angeordnet sind,
wobei die vorderen Lagerelemente (25) als Feder-/Dämpfereinheit ausgeführt sind, **dadurch gekennzeichnet, dass** die hinteren Lagerelemente (27) als Molekularlager ausgeführt sind.

2. Lagerung nach Anspruch 1,
**dadurch gekennzeichnet, dass** die hinteren Lagerelemente (27) im Bereich der Sattelkupplung (13) vorgesehen sind.

3. Lagerung nach einem der Ansprüche 1 bis 2,
**dadurch gekennzeichnet, dass** die vorderen Lagerelemente (25) derart ausgeführt sind, dass durch sie Vertikal- oder Querkräfte aufnehmbar sind.

4. Lagerung nach einem der Ansprüche 1 bis 3,
**dadurch gekennzeichnet, dass** im vorderen Bereich des Fahrerhauses (2) wenigstens ein Element (40) vorgesehen ist, durch das das Fahrerhaus (2) seitlich geführt ist.

5. Lagerung nach einem der Ansprüche 1 bis 4,
**dadurch gekennzeichnet, dass** im vorderen Bereich des Fahrerhauses (2) ein Stützelement vorgesehen ist, das einer Wankbewegung des Fahrerhauses (2) entgegen wirkt.

6. Lagerung nach einem der Ansprüche 1 bis 5,
**dadurch gekennzeichnet, dass** die vorderen Lagerelemente (25) eine quer zur Fahrtrichtung (15) angeordnete Blattfeder aufweisen.

7. Lagerung nach einem der Ansprüche 1 bis 6,
**dadurch gekennzeichnet, dass** zumindest ein Außenhautbauteil (3, 4) des Fahrerhauses (2) in die Tragstruktur (6) integriert oder an dieser befestigt ist.

8. Lagerung nach einem der Ansprüche 1 bis 7,
**dadurch gekennzeichnet, dass** die hinteren Lagerelemente (27) derart ausgeführt sind, dass das Fahrerhaus (2) um eine durch die hinteren Lagerelemente (27) verlaufende Achse (14) aus einer Betriebs- in eine Wartungsstellung schwenk- oder kippbar ist.

9. Lagerung nach einem der Ansprüche 1 bis 8,
**dadurch gekennzeichnet, dass** die Kabine (5) von der Tragstruktur (6) zumindest bereichsweise trennbar ist.

10. Lagerung nach Anspruch 9,
**dadurch gekennzeichnet, dass** zwischen Kabine (5) und Tragstruktur (6) wenigstens ein Scharnierelement vorgesehen ist.

11. Lagerung nach einem der Ansprüche 1 bis 10,
**dadurch gekennzeichnet, dass** die vorderen Lagerelemente (25) den Fahrgestellrahmen mit der Tragstruktur (6) verbinden.

12. Lagerung nach einem der Ansprüche 1 bis 11,
**dadurch gekennzeichnet, dass** wenigsten ein Lagerelement (25, 27) mit einem ein Fahrzeugrad (9) tragenden Bauteil (26), insbesondere einer Fahrzeugachse (8) oder einem Element einer Einzelradaufhängung, verbunden ist.

## Claims

1. Suspension of a driver's cab (2) of an articulated lorry (1), the driver's cab having a supporting structure (6) and a cab (5) connected to the latter, with at least two bearing elements (25, 27) arranged in a front region and two bearing elements (25, 27) arranged in a rear region of the driver's cab (2), via which bearing elements the driver's cab (2) is connected by its supporting structure (6) indirectly or directly to a chassis frame,
wherein the rear bearing elements (27) are arranged behind a rear wall (17) of the driver's cab (2) in the direction of travel (15) of the articulated lorry (1), wherein the front bearing elements (25) are designed as a spring/damper unit, **characterized in that** the rear bearing elements (27) are designed as molecular bearings.

2. Suspension according to Claim 1, **characterized in that** the rear bearing elements (27) are provided in the region of the fifth wheel (13).

3. Suspension according to either of Claims 1 and 2, **characterized in that** the front bearing elements (25) are designed in such a manner that vertical and transverse forces can be absorbed by them.

4. Suspension according to one of Claims 1 to 3, **characterized in that** at least one element (40) by means of which the driver's cab (2) is guided laterally is provided in the front region of the driver's cab (2).

5. Suspension according to one of Claims 1 to 4, **characterized in that** a support element which opposes a rolling motion of the driver's cab (2) is provided in the front region of the driver's cab (2).

6. Suspension according to one of Claims 1 to 5, **characterized in that** the front bearing elements (25) have a leaf spring arranged transversely with respect to the direction of travel (15).

7. Suspension according to one of Claims 1 to 6, **characterized in that** at least one outer skin component (3, 4) of the driver's cab (2) is integrated in the supporting structure (6) or is fastened thereto.

8. Suspension according to one of Claims 1 to 7, **characterized in that** the rear bearing elements (27) are designed in such a manner that the driver's cab (2) is pivotable or tiltable about an axis (14) running through the rear bearing elements (27) from an operating position into a maintenance position.

9. Suspension according to one of Claims 1 to 8, **characterized in that** the cab (5) is separable at least in regions from the supporting structure (6).

10. Suspension according to Claim 9, **characterized in that** at least one hinge element is provided between cab (5) and supporting structure (6).

11. Suspension according to one of Claims 1 to 10, **characterized in that** the front bearing elements (25) connect the chassis frame to the supporting structure (6).

12. Suspension according to one of Claims 1 to 11, **characterized in that** at least one bearing element (25, 27) is connected to a component (26) supporting a vehicle wheel (9), in particular a vehicle axle (8) or an element of an individual wheel suspension.

## Revendications

1. Suspension d'une cabine de conduite (2) d'un tracteur de semi-remorque (1) qui présente une structure porteuse (6) et une cabine (5) assemblée à celle-ci, comprenant au moins deux éléments de palier (25) disposés dans une région avant et deux éléments de palier (27) disposés dans une région arrière de la cabine de conduite (2), par le biais desquels la cabine de conduite (2) est assemblée par sa structure porteuse (6) de manière directe ou indirecte à un cadre de châssis,
les éléments de palier arrière (27) étant disposés dans la direction de conduite (15) du tracteur de semi-remorque (1) derrière une paroi arrière (17) de la cabine de conduite (2),
les éléments de palier avant (25) étant réalisés sous forme d'unité d'amortissement à ressort, **caractérisée en ce que** les éléments de palier arrière (27) sont réalisés sous forme de palier moléculaire.

2. Suspension selon la revendication 1,
**caractérisée en ce que** les éléments de palier arrière (27) sont prévus dans la région de la sellette d'attelage (13).

3. Suspension selon l'une quelconque des revendications 1 à 2,
**caractérisée en ce que** les éléments de palier avant (25) sont réalisés de telle sorte qu'ils puissent recevoir des forces verticales et transversales.

4. Suspension selon l'une quelconque des revendications 1 à 3,
**caractérisée en ce qu'**au moins un élément (40) est prévu dans la région avant de la cabine de conduite (2), par lequel la cabine de conduite (2) est guidée latéralement.

5. Suspension selon l'une quelconque des revendications 1 à 4,
**caractérisée en ce qu'**un élément de support est prévu dans la région avant de la cabine de conduite (2), lequel agit à l'encontre d'un mouvement de roulis de la cabine de conduite (2).

6. Suspension selon l'une quelconque des revendications 1 à 5,
**caractérisée en ce que** les éléments de palier avant (25) présentent un ressort à lame disposé transversalement à la direction de conduite (15).

7. Suspension selon l'une quelconque des revendications 1 à 6,
**caractérisée en ce qu'**au moins un composant de peau extérieure (3, 4) de la cabine de conduite (2) est intégré dans la structure porteuse (6) ou est fixé sur celle-ci.

8. Suspension selon l'une quelconque des revendications 1 à 7,
**caractérisée en ce que** les éléments de palier arrière (27) sont réalisés de telle sorte que la cabine de conduite (2) puisse pivoter ou basculer autour d'un axe (14) s'étendant à travers les éléments de palier arrière (27) d'une position fonctionnelle dans une position d'entretien.

9. Suspension selon l'une quelconque des revendications 1 à 8,
**caractérisée en ce que** la cabine (5) peut être séparée au moins en partie de la structure porteuse (6).

10. Suspension selon la revendication 9,
**caractérisée en ce qu'**entre la cabine (5) et la structure porteuse (6) est prévu au moins un élément de charnière.

11. Suspension selon l'une quelconque des revendications 1 à 10,
**caractérisée en ce que** les éléments de palier avant (25) relient le cadre de châssis à la structure porteuse (6).

12. Suspension selon l'une quelconque des revendications 1 à 11,
**caractérisée en ce qu'**au moins un élément de palier (25, 27) est connecté à un composant (26) portant une roue de véhicule (9), en particulier un essieu de véhicule (8) ou un élément d'une suspension de roue individuelle.
